(19) Europäisches Patentamt
European Patent Office
Office européen des brevets

(11) **EP 4 810 822 A1**

(12) **EUROPEAN PATENT APPLICATION**
published in accordance with Art. 153(4) EPC

(43) Date of publication:
**23.09.2026 Bulletin 2026/39**

(21) Application number: **24891117.4**

(22) Date of filing: **07.10.2024**

(51) International Patent Classification (IPC):
***F16F 15/126*** *(2006.01)* ***C08K 3/04*** *(2006.01)*
***C08L 23/16*** *(2006.01)* ***C08L 45/02*** *(2006.01)*
***C08L 91/00*** *(2006.01)*

(52) Cooperative Patent Classification (CPC):
**C08K 3/04; C08L 23/16; C08L 45/02; C08L 91/00; F16F 15/126**

(86) International application number:
**PCT/JP2024/035724**

(87) International publication number:
**WO 2025/105075 (22.05.2025 Gazette 2025/21)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.11.2023 JP 2023193458**

(71) Applicant: **NOK Corporation**
**Minato-ku**
**Tokyo 105-8585 (JP)**

(72) Inventors:
- **NAKAMURA, Jin**
  **Fujisawa-shi, Kanagawa 251-0042 (JP)**
- **SHIONUMA, Koki**
  **Saihaku-gun, Tottori 683-0362 (JP)**
- **SOBARU, Shogo**
  **Saihaku-gun, Tottori 683-0362 (JP)**

(74) Representative: **Global IP Europe Patentanwaltskanzlei**
**Pfarrstraße 14**
**80538 München (DE)**

(54) **RUBBER COMPOSITION**

(57) The problem addressed by the present application is to provide a rubber composition having excellent in vibration-proof and silencing properties.

The rubber composition disclosed by the present application is a cross-linked rubber composition containing ethylene propylene diene rubber (EPDM), 110 to 190 parts by mass of a carbon black based on 100 parts by mass of the ethylene propylene diene rubber, 10 to 35 parts by mass of an aromatic modified terpene resin based on 100 parts by mass of the ethylene propylene diene rubber, a crosslinking agent, and oil. The carbon black has a nitrogen adsorption specific surface area of 70 to 120 $m^2/g$, an iodine adsorption amount of 70 to 125 mg/g, and a DBP oil adsorption amount of 50 to 100 $cm^3/100$ g.

1

2c
2b
2a
2
3
4
4a

FIG.1

EP 4 810 822 A1

## Description

Technical Field

The present invention relates to a rubber composition.

Background Art

Rubber compositions have traditionally been used in a variety of applications. Rubber compositions are required to have various properties depending on their uses. Rubber compositions are, in the case of using the resin compositions as materials that are excellent in vibration-proof property, required to have excellent silencing properties against radiation sound derived from vibrations.

Fig. 1 of Patent Literature 1 (Japanese Patent Application Publication No. 2020-41684) discloses, as a technique for enhancing a silencing property, a torsional damper including: a boss part attached to a front end of a crankshaft; a vibrating ring disposed outside the boss part, and with an outer peripheral surface around which a belt is wound; and a hollow part formed along an outer edge of a front surface of the boss part to mute radiation sound emitted from the center of the front surface of the boss part through the crankshaft with the use of interference of sound waves ([0017]). However, the volume and opening area of the hollow part need to be appropriately set depending on the radiation sound from the crankshaft, and there has been room for further improvement from the viewpoint of versatility.

Document List

Patent Literature

Patent Literature 1: Japanese Patent Application Publication No. 2020-41684

Summary of Invention

Technical Problem

The present invention has been made in view of the circumstances mentioned above, and the present inventors have found a rubber composition in which the rubber hardness Hs and the sound pressure level have a specific relationship, capable of reducing the sound pressure level and excellent in vibration-proof property, thereby completing the present invention. More specifically, the present invention provides a rubber composition that is excellent in vibration-proof and silencing properties.

Solution to Problem

The gist configuration of the present invention is as follows.

[1] A rubber composition, in which a sound pressure level and a rubber hardness measured with the rubber composition being vibrated in accordance with the following vibration condition satisfy the following formula (1):

$$\text{(sound pressure level) (dB)} \leq 0.045x^2 - 6.63x + 351.33 \quad (1)$$

(in the formula (1), x represents a rubber hardness Hs°, with x meeting $45 \leq x \leq 85$)

[Vibration Condition]

The rubber composition at 55 to 65°C is subjected to a sweep test at a vibration amplitude of ±10 G and a sweep frequency of 200 to 3000 Hz.

[2] The rubber composition according to [1], in which the rubber composition is a cross-linked rubber composition including: 250256

an ethylene propylene diene rubber (EPDM);
110 to 190 parts by mass of a carbon black based on 100 parts by mass of the ethylene propylene diene rubber;
10 to 35 parts by mass of an aromatic modified terpene resin based on 100 parts by mass of the ethylene propylene

diene rubber;
a crosslinking agent; and
an oil, and
the carbon black has a nitrogen adsorption specific surface area of 70 to 120 $m^2$/g, an iodine adsorption amount of 70 to 125 mg/g, and a DBP oil adsorption amount of 50 to 100 $cm^3$/100 g.

[3] The rubber composition according to [1] or [2], in which the rubber composition is a rubber composition for a torsional damper.

[4] A cross-linked rubber composition including:

an ethylene propylene diene rubber (EPDM);
110 to 190 parts by mass of a carbon black based on 100 parts by mass of the ethylene propylene diene rubber;
10 to 35 parts by mass of an aromatic modified terpene resin based on 100 parts by mass of the ethylene propylene diene rubber;
a crosslinking agent; and
an oil,
in which the carbon black has a nitrogen adsorption specific surface area of 70 to 120 $m^2$/g, an iodine adsorption amount of 70 to 125 mg/g, and a DBP oil adsorption amount of 50 to 100 $cm^3$/100 g.

[5] The rubber composition according to [4], in which the rubber composition is a rubber composition for a torsional damper.

Effects of Invention

A rubber composition that is excellent in vibration-proof and silencing properties can be provided.

Brief Description of Drawings

[Fig. 1] A broken perspective view showing an example of a torsional damper including a rubber composition according to the present invention.
[Fig. 2] A graph showing a relationship between the hardness and sound pressure level of a rubber composition in accordance with formulas (1) to (3).
[Fig. 3] A diagram showing a method for measuring the sound pressure level of a rubber composition according to an embodiment.
[Fig. 4] A diagram showing a torsional damper for use in measuring a sound pressure level.

Description of Embodiments

In a rubber composition according to the present invention, a sound pressure level and a rubber hardness measured with the rubber composition being vibrated in accordance with the following vibration condition satisfy the following formula (1):

$$\text{(sound pressure level) (dB)} \leq 0.045x^2 - 6.63x + 351.33 \quad (1)$$

(in the formula (1), x represents a rubber hardness Hs° (unit), with x meeting $45 \leq x \leq 85$)

[Vibration Condition]

The rubber composition at 55 to 65°C is subjected to a sweep test at a vibration amplitude of ±10 G and a sweep frequency of 200 to 3000 Hz.

The vibration condition is achieved by vibrating the rubber composition with a vibration machine. In addition, the rubber composition is intended to be integrated with a vibrating body to prevent the vibration of the vibrating body 250256 and mute radiation sound from the vibrating body. Accordingly, the sound pressure level of the rubber composition is measured while the rubber composition in a structure also is vibrated by fixing the structure in which the rubber composition and the vibrating body are integrated to the vibration machine and vibrating the structure with the vibration machine. For

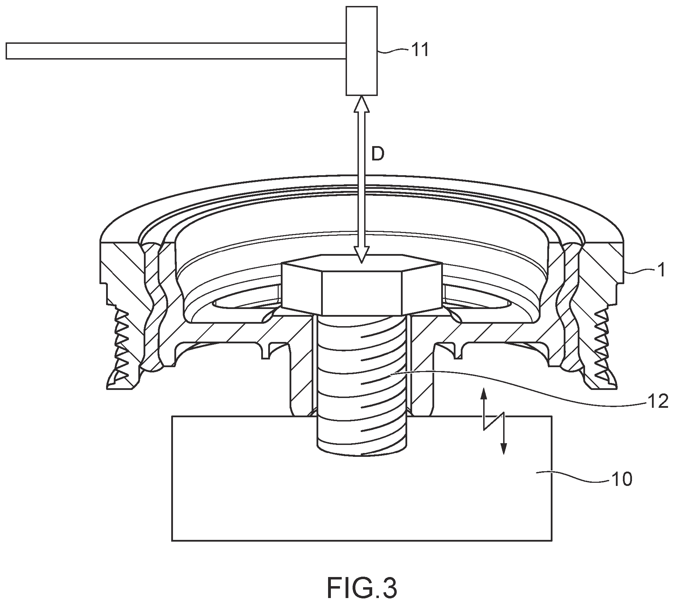

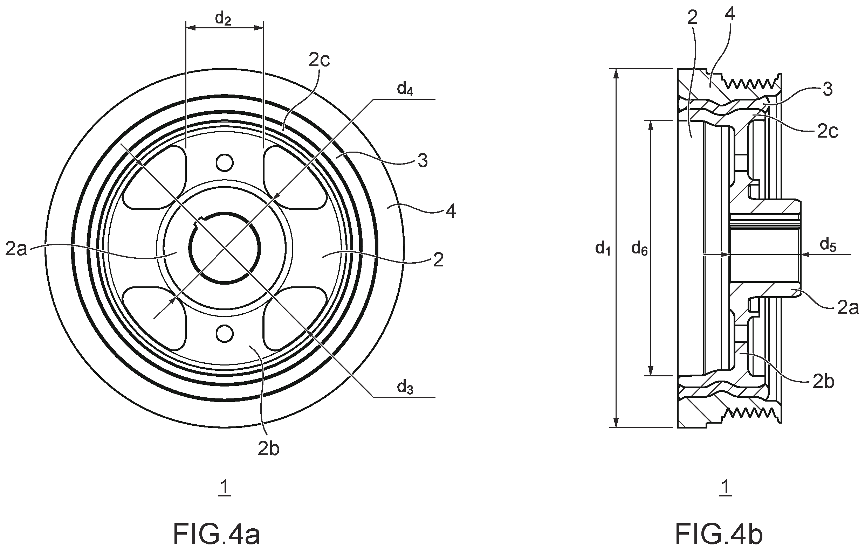

example, in the case of using a torsional damper including the rubber composition according to the present invention as the structure, the center of a torsional damper 1 is fixed to a vibration machine 10 with a bolt 12 as described later with reference to Fig. 3. Next, while the torsional damper and the rubber composition included in the torsional damper are subjected to a sweep test under the vibration condition mentioned above to vibrate the torsional damper and the rubber composition, the sound pressure level of the rubber composition is measured with a microphone 11 disposed at a position where the distance D from the bolt 12 for fixing in the bolt axial direction is 70 mm with respect to the radiation sound emitted from the torsional damper. As the microphone, a free sound field type 378A06 manufactured by PCB, Inc. can be used. As the torsional damper for measuring the sound pressure level of the rubber composition, a torsional damper that has the shape and dimensions shown in Fig. 4 is used. Further, the material of a hub 2 and a vibrating ring 4 of the torsional damper 1 in Fig. 4 is FC250 (cast iron), and the projected area of the hub 2 is 6236 $mm^2$, with d1 (the outer diameter of the torsional damper 1) = 147 mm, d2 (stay width) = 32 mm, d3 (the outer diameter of the casting window) = 95 mm, d4 (the inner diameter of the casting window) = 57 mm, d5 (the width of a boss part) = 29.5 mm, and d6 (the inner diameter of the hub) = 105 mm. The torsional damper 1 in Fig. 4 includes the rubber composition according to the present invention as a rubber ring 3.

The rubber composition according to the present invention has a high $\tan\delta$ (loss coefficient), and satisfies the relationship of the above-mentioned formula (1), thereby achieving excellent vibration-proof and silencing properties. Further, the rubber hardness Hs° can be measured under the conditions of JIS K6253 with the use of a type A durometer. In addition, the formula (1) is represented by a line represented as standard 3 in F. 2 described later.

The $\tan\delta$ of the rubber composition is preferably 0.29 or more. The $\tan\delta$ of the rubber composition falls within these ranges, thereby allowing the rubber composition to have excellent vibration-proof and silencing properties.

The rubber hardness Hs of the rubber composition can be adjusted with the component composition of the rubber composition. The rubber composition is preferably a thermosetting rubber composition containing an ethylene propylene diene rubber (EPDM), a carbon black, an aromatic modified terpene resin, a crosslinking agent, and oil, which is crosslinked with the crosslinking agent. In addition, the rubber composition is more preferably a crosslinked rubber composition including an ethylene propylene diene rubber (EPDM), 110 to 190 parts by mass of a carbon black based on 100 parts by mass of the ethylene propylene diene rubber, 10 to 35 parts by mass of an aromatic modified terpene resin based on 100 parts by mass of the ethylene propylene diene rubber, a crosslinking agent, and oil, in which the carbon black has a nitrogen adsorption specific surface area of 70 to 120 $m^2/g$, an iodine adsorption amount of 70 to 125 mg/g, and a DBP oil adsorption amount of 50 to 100 $cm^3/100$ g.

The rubber hardness Hs of the rubber composition can be made within a desired range of 45° or more and 85° or less by adjusting the content and type of a carbon black that has the property of hardening the rubber composition and the content and type of an oil that has the property of softening the rubber composition. The oil may be contained in the ethylene propylene diene rubber in advance to provide an oil-extended polymer-type ethylene propylene diene rubber. The ethylene propylene diene rubber may be an oil-free non-oil-extended polymer-type ethylene propylene diene rubber, and the rubber composition may contain the non-oil-extended polymer-type ethylene propylene 250256 diene rubber and an oil. The rubber composition may contain an oil-extended polymer-type ethylene propylene diene rubber and an oil. Further, in the case of the oil-extended polymer-type ethylene propylene diene rubber, the content of the ethylene propylene diene rubber in the rubber composition is the content of the entire oil-extended polymer-type ethylene propylene diene rubber excluding the oil content. The Mooney viscosity ML1+4 (125°C) of the oil-extended polymer-type ethylene propylene diene rubber (before crosslinking) is preferably 50 or more.

When the ethylene propylene diene rubber contains ENB (5-ethylidene-2-norbornene) as a diene unit, the content of the ENB in the ethylene propylene diene rubber is preferably 4.0 to 9.0% by mass, more preferably 4.5 to 8.5% by mass. As the ethylene propylene diene rubber, commercially available products can be used. Examples of the commercially available oil-extended polymer-type ethylene propylene diene rubber include EP98 (trade name) manufactured by ENEOS Corporation and KELTAN4869C (trade name) manufactured by ARLANXEO. Examples of the commercially available non-oil-extended polymer-type ethylene propylene diene rubber include EP35 (trade name) manufactured by ENEOS Corporation and KELTAN2750 (trade name) manufactured by ARLANXEO.

As for the content of the carbon black in the rubber composition, the carbon black is preferably 110 to 190 parts by mass, more preferably 120 to 180 parts by mass based on 100 parts by mass of the ethylene propylene diene rubber. The content of the carbon black falls within the range mentioned above, thereby allowing the rubber composition to have excellent processability. The nitrogen adsorption specific surface area of the carbon black is preferably 70 to 120 $m^2/g$, more preferably 80 to 110 $m^2/g$. The nitrogen adsorption specific surface area represents a specific surface area per unit weight of the carbon black, and can be measured in accordance with JIS K6217-2:2001. The iodine adsorption amount 250256 of the carbon black is preferably 70 to 125 mg/g, more preferably 80 to 120 mg/g. The iodine adsorption amount can be measured in accordance with JIS K6217-1:2008. The DBP oil adsorption amount of the carbon black is preferably 50 to 100 $cm^3/100$ g, more preferably 60 to 90 $cm^3/100$ g. The DBP oil adsorption amount can be measured in accordance with JIS K6217-4:2017. Specific examples of the carbon black may include HAF-LS carbon black and ISAF-LS carbon black. The nitrogen adsorption specific surface area, iodine adsorption amount, and DBP oil adsorption amount of the

carbon black fall within the ranges mentioned above, thereby allowing the internal friction of the rubber composition to be increased with excellent processability. As a result, the tanδ of the rubber composition can be improved to improve the silencing property of the rubber composition.

As for the content of the aromatic modified terpene resin in the rubber composition, the aromatic modified terpene resin is preferably 10 to 35 parts by mass, more preferably 15 to 35 parts by mass, still more preferably 15 to 30 parts by mass, based on 100 parts by mass of the ethylene propylene diene rubber. The content of the aromatic modified terpene resin within the range mentioned above causes the rubber composition to have excellent tackiness, and improves compatibility with the ethylene propylene diene rubber. For this reason, the glass transition point of the ethylene propylene diene rubber is shifted to a higher temperature side, thereby allowing the tanδ of the rubber composition to be improved to improve the silencing property of the rubber composition. The aromatic modified terpene resin is obtained by copolymerization of a terpene monomer such as α-pinene, β-pinene, or dipentene (limonene) with an aromatic monomer such as styrene having a substituent or styrene having no substituent, and may be an oligomer that has a molecular weight of several hundreds to several thousands.

As for the content of the crosslinking agent in the rubber composition, the crosslinking agent is preferably 3 to 5 parts by mass, more preferably 3.3 to 4.5 parts by mass based on 100 parts by mass of the ethylene propylene diene rubber. As the crosslinking agent, at least an organic peroxide-based crosslinking agent is preferably used, and examples of the organic peroxide-based crosslinking agent include a dicumyl peroxide (DCP). In addition, as the crosslinking agent, sulfur can be used together with an organic peroxide-based crosslinking agent.

As for the content of the oil in the rubber composition, the oil is preferably 45 to 80 parts by mass, more preferably 55 to 70 parts by mass based on 100 parts by mass of the ethylene propylene diene rubber. As the oil, a mineral oil is preferably used, and examples of the mineral oil include a paraffin oil. In addition, the rubber composition can contain components such as a zinc oxide, a stearic acid, an anti-aging agent, and a co-crosslinking agent, besides the ethylene propylene diene rubber, the carbon black, the aromatic modified terpene resin, the crosslinking agent, and the oil.

An embodiment relates to a cross-linked rubber composition including:

an ethylene propylene diene rubber (EPDM);
110 to 190 parts by mass of a carbon black based on 100 parts by mass of the ethylene propylene diene rubber;
10 to 35 parts by mass of an aromatic modified terpene resin based on 100 parts by mass of the ethylene propylene diene rubber;
a crosslinking agent; and
an oil,
in which the carbon black has a nitrogen adsorption specific surface area of 70 to 120 $m^2/g$, an iodine adsorption amount of 70 to 125 mg/g, and a DBP oil adsorption amount of 50 to 100 $cm^3/100$ g. The rubber composition according to this embodiment contains the specific components in accordance with the 250256 specific composition, thus allowing excellent vibration-proof and silencing properties to be achieved by the synergistic action of the specific components.

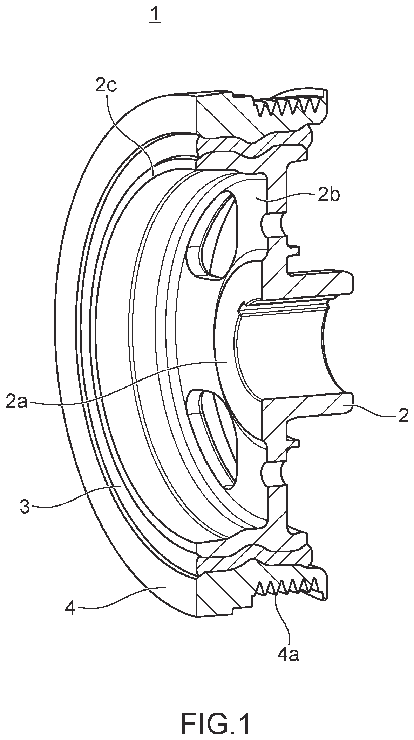

The rubber composition according to the present invention is preferably a rubber composition for a torsional damper. The rubber composition can effectively mute sound emitted from the hub in the use of the torsional damper. Fig. 1 is a broken perspective view showing a part of a torsional damper including the rubber composition according to the present invention. As shown in Fig. 1, the torsional damper 1 is attached to an end of a crankshaft of an engine of an automobile, and intended to transmit the rotation of the crankshaft to an alternator, a power steering, and the like. The torsional damper 1 includes the hub 2 including the boss part 2a, the stay 2b, and an outer peripheral part 2c, the rubber ring 3 made of the rubber composition according to the present invention, and the vibrating ring 4. The boss part 2a is fastened to the end of the crankshaft, and rotationally driven around the central axis thereof. The outer peripheral surface of the vibrating ring 4 is provided with a pulley groove 4a to which a belt is fitted, thereby constituting a pulley for power transmission.

The torsional damper 1 can eliminate (absorb) torsional resonance of the crankshaft, with the vibrating ring 4 resonating in the rotation direction and the rubber ring 3 preventing the vibration. The resonance frequency of the vibrating ring 4 in the rotation direction is often approximately 300 to 600 Hz. On the other hand, the vibrating ring 4 also resonates in the axial direction, and the frequency is several hundred Hz, which is about the same as the torsional vibration. Because of the largest local resonance of the hub 2, radiation sound is emitted from the hub 2.

In the torsional damper 1, the stay 2b and outer peripheral part 2c of the hub 2 are sound sources for the radiation sound caused by the local resonance of the hub 2. Thus, the radiation sound can be reduced by increasing the tanδ as described below. 250256

(i) A formula that represents the (hub axial vibration speed) is shown as the following formula (4). As shown by the following formula (4), the (hub axial vibration speed) depends on the (hub axial acceleration) and the (hub axial

frequency).

(hub axial vibration speed) = (hub axial acceleration)/(2 × π × hub axial (4) (4)

(ii) Increasing the tanδ decreases the (hub axial acceleration).
(iii) Increasing the tanδ shifts the local resonance frequency of the hub, which is the (hub axial frequency), to a higher frequency.

As described above, increasing the tanδ of the rubber composition constituting the rubber ring 3 allows the vibration speed in the hub axial direction to be reduced, thereby allowing the radiation sound to be reduced.

Examples

(Examples 1 to 3 and Comparative Examples 1 to 3)

Materials that have the compositions shown in Table 1 below are kneaded with the use of a kneading machine such as an intermix, a kneader, or a Banbury mixer, an open roll, or the like. Next, press-crosslinking was performed at 180°C for 6.0 minutes to prepare rubber compositions respectively for measuring the rubber hardness Hs and the tanδ. In addition, separately from the foregoing, an annular rubber composition was prepared, and the annular rubber composition was press-fitted as the rubber ring 3 between the respective metal members of the boss part 2a and vibrating ring 4 to prepare the torsional damper 1 for measuring a sound pressure level as shown in Fig. 4. In the torsional damper 1 in Fig. 4, the material of the hub 2 and vibrating ring 4 is FC250 (cast iron), and the projected area of the hub 2 is 6236 $mm^2$, with d1 (the outer diameter of the torsional damper 1) = 147 mm, d2 (stay width) = 32 mm, d3 (the outer diameter of the casting window) = 95 mm, d4 (the inner diameter of the casting window) = 57 mm, ds (the width of a boss part) = 29.5 mm, and $d_6$ (the inner diameter of the hub) = 105 mm, and further, in each of the examples, the rubber hardness Hs was adjusted to be 55°, 65°, or 75° by adjusting the composition of the material.

[Table 1]

| | Example 1 | Example 2 | Example 3 | Comparative Example 1 | Comparative Example 2 | Comparative Example 3 |
|---|---|---|---|---|---|---|
| Rubber Hardness Hs [°] | 55 | 65 | 75 | 55 | 65 | 75 |
| Oil-extended EPDM1 | | | | 97 | 40 | 26.5 |
| Oil in Oil-extended EPDM1 | | | | 48.5 | 20 | 13 |
| Oil-extended EPDM2 | 140 | 140 | 110 | | | |
| Oil in Oil-extended EPDM2 | 70 | 70 | 55 | | | |
| Non-oil-extended EPDM1 | | | | 41.5 | 32 | 26 |
| Non-oil-extended EPDM2 | 3 | 3 | 4 | 9.5 | 47.5 | 61 |
| Non-oil-extended EPDM3 | 27 | 27 | 41 | | | |
| Carbon Black A | | | | 54.5 | 23 | 15.5 |
| Carbon Black B | | | | 22 | 52 | 58 |
| Carbon Black C | 120 | 160 | 180 | | | |
| Aromatic Modified Terpene Resin | 15 | 15 | 30 | 10 | 8 | 7.5 |

(continued)

| | Example 1 | Example 2 | Example 3 | Comparative Example 1 | Comparative Example 2 | Comparative Example 3 |
|---|---|---|---|---|---|---|
| Resin B | | | | | 2 | 2.5 |
| Sulfur | 0.05 | 0.15 | 0.3 | | | |
| DCP | 3.3 | 3.3 | 4.2 | 2.5 | 2.6 | 2.6 |
| Oil A | | | | 1.5 | | |

It is to be noted that each of the numerical values in Table 1 represents (parts by mass). Further, the parts by mass of the oil-extended EPDM1 and oil-extended EPDM2 each represent the parts by mass of the total of EPDM and oil, and the "oil in oil-extended EPDM1" and the "oil in oil-extended EPDM2" respectively represent the parts by mass of the oils in the oil-extended EPDM1 and the oil-extended EPDM2. Thus, the parts by mass of the EPDM in the oil-extended EPDM1 corresponds to (oil-extended EPDM1) - (oil in oil-extended EPDM1). Similarly, the parts by mass of the EPDM in the oil-extended EPDM2 corresponds to (oil-extended EPDM2) - (oil in oil-extended EPDM2).

The names of the materials used in each of the examples are shown below,

oil-extended EPDM1: ML1+4 (125°C) = 48, ENB content: 8.7% by mass, C2 content: 62% by mass
oil-extended EPDM2: ML1+4 (125°C) = 52, ENB content: 4.5% by mass, C2 content: 58% by mass
non-oil-extended EPDM1: ML1+4 (125°C) = 65, ENB content: 9.0% by mass, C2 content: 44% by mass
non-oil-extended EPDM2: ML1+4 (100°C) = 38, ENB content: 5.8% by mass, C2 content: 61% by mass
non-oil-extended EPDM3: ML1+4 (125°C) = 87, ENB content: 4.5% by mass, C2 content: 59% by mass
carbon black A: SRF-HS carbon black, nitrogen adsorption specific surface area: 32 $m^2$/g, iodine adsorption amount: 30 mg/g, DBP oil adsorption amount: 140 $cm^3$/100 g
carbon black B: HAF carbon black, nitrogen adsorption specific surface area: 79 $m^2$/g, iodine adsorption amount: 80 mg/g, DBP oil adsorption amount: 101 $cm^3$/100 g
carbon black C: HAF-LS carbon black, nitrogen adsorption specific surface area: 84 $m^2$/g, iodine adsorption amount: 86 mg/g, DBP oil adsorption amount: 75 $cm^3$/100 g
aromatic modified terpene resin: YS resin TO-115 (trade name); ethylenevinyl acetate copolymer (compound name)
resin B: ULTRASEN 750 (trade name)
DCP: dicumyl peroxide
oil A: Diana Process Oil PW-380 (trade name)

For the rubber composition obtained according to each of the examples, the rubber hardness Hs, the tanδ, and the sound pressure level were measured in accordance with the following methods.

(Rubber Hardness Hs) 250256

For the rubber composition obtained according to each of the examples, the rubber hardness Hs was measured under the conditions of JIS K6253 with the use of a hardness meter of type A durometer.

(tanδ)

For the rubber composition obtained according to each of the examples the tanδ was measured under the conditions of 60°C, vibration frequency: 100 Hz, and dynamic strain: 1% with a viscoelastic spectrometer (trade name) or a rheometer manufactured by UBM.

(Sound Pressure Level)

The torsional damper including the rubber composition obtained according to each of the examples as a rubber ring was used for the measurement of the sound pressure level. As shown in Fig. 3, the center of the torsional damper 1 for measuring the sound pressure level produced as described above was fixed to the vibration machine 10 with the bolt 12 interposed therebetween. As the vibration machine, a high-frequency dynamic characteristic test system (trade name) manufactured by SAGINOMIYA SEISAKUSHO, INC. was used. With this test system, the torsional damper 1 and the rubber composition, as the rubber ring 3, included in the torsional damper 1 were heated to 55 to 65°C, and subjected to a sweep test at a vibration amplitude of ±10 G and a sweep frequency of 200 to 3000 Hz. The sound pressure level of the

sound emitted from the torsional damper 1 including the rubber composition (rubber ring 3) was measured with the microphone 11 (manufactured by PCB Inc.; free sound field type 378A06) disposed at a position where the distance D from the bolt 12 in the bolt axial direction was 70 mm in the sweep test.

The tanδ and sound pressure level measured for each of the examples are shown in Table 2 below.

[Table 2]

| | Example 1 | Example 2 | Example 3 | Comparative Example 1 | Comparative Example 2 | Comparative Example 3 |
|---|---|---|---|---|---|---|
| Rubber Hardness Hs [°] | 55 | 65 | 75 | 55 | 65 | 75 |
| tanδ [-] | 0.29 | 0.33 | 0.34 | 0.2 | 0.22 | 0.19 |
| Sound Pressure Level [dB] | 122.3 | 110 | 106.2 | 125.9 | 115.5 | 116.5 |

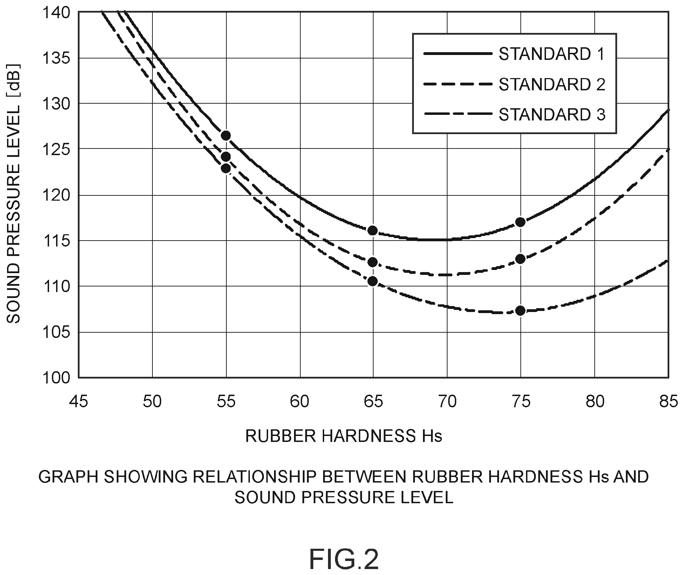

In addition, Fig.2 shows relational expressions between the rubber hardness Hs from 45° to 85° and the sound pressure level in accordance with a formula (3); $0.057x^2 - 7.88x + 387.38$, a formula (2); $0.0593x^2 - 8.2668x + 399.46$, and a formula (1); $0.045x^2 - 6.63x + 351.33$. It is to be noted that the formulas (3), (2), and (1) are shown respectively as standards 1, 2, and 3 in Fig. 2. In addition, Fig. 2 shows, as dots, sound pressure levels at the rubber hardness Hs of 55°, 65°, and 75° in accordance with the standards 1, 2, and 3. In addition, Table 3 below shows the values of sound pressure levels at the rubber hardness Hs of 55°, 65°, and 75° in accordance with the standards 1, 2, and 3.

[Table 3]

| Rubber Hardness Hs [°] | Standard 1 | Standard 2 | Standard 3 |
|---|---|---|---|
| 55 | 126.4 | 124.1 | 122.8 |
| 65 | 116.0 | 112.6 | 110.5 |
| 75 | 117.0 | 112.9 | 107.2 |

The rubber compositions according to Examples 1 to 3 all have sound pressure levels lower than that represented by the standard 3, and it is determined that the rubber compositions according to the present invention exhibit excellent silencing properties. In addition, the rubber compositions according to Examples 1 to 3 have high tanδ of 0.29 or more as compared with Comparative Examples 1 to 3, and it is determined that the rubber compositions exhibit excellent vibration-proof properties.

In contrast, it is determined that the rubber compositions according to Comparative Examples 1 to 3 fail to exhibit sufficient silencing properties, although the rubber compositions have sound pressure levels lower than that represented by the standard 1, but in excess of the sound pressure levels represented by the standards 2 and 3. In addition, the rubber compositions according to Comparative Examples 1 to 3 have low tanδ of 0.22 or less, and it is determined that the rubber compositions are poor in vibration-proof property.

List of Reference Signs

1 torsional damper
2 hub
2a boss part
2b stay
2c outer peripheral part
3 rubber ring
4 vibrating ring
4a pulley groove

## Claims

1. A rubber composition, wherein a sound pressure level and a rubber hardness measured with the rubber composition being vibrated in accordance with the following vibration condition satisfy the following formula (1):

$$\text{(sound pressure level) (dB)} \leq 0.045x^2 - 6.63x + 351.33 \quad (1)$$

(in the formula (1), x represents a rubber hardness Hs°, with x meeting $45 \leq x \leq 85$)
[Vibration Condition]
the rubber composition at 55 to 65°C is subjected to a sweep test at a vibration amplitude of ±10 G and a sweep frequency of 200 to 3000 Hz.

2. The rubber composition according to claim 1, wherein
the rubber composition is a cross-linked rubber composition comprising:

an ethylene propylene diene rubber (EPDM);
110 to 190 parts by mass of a carbon black based on 100 parts by mass of the ethylene propylene diene rubber;
10 to 35 parts by mass of an aromatic modified terpene resin based on 100 parts by mass of the ethylene propylene diene rubber;
a crosslinking agent; and
an oil, and
the carbon black has a nitrogen adsorption specific surface area of 70 to 120 $m^2$/g, an iodine adsorption amount of 70 to 125 mg/g, and a DBP oil adsorption amount of 50 to 100 $cm^3$/100 g.

3. The rubber composition according to claim 1 or 2, wherein the rubber composition is a rubber composition for a torsional damper.

1
2c
2b
2a
2
3
4
4a

FIG.1

140
135
130
125
120
115
110
105
100
45
50
55
60
65
70
75
80
85
SOUND PRESSURE LEVEL [dB]
RUBBER HARDNESS Hs
STANDARD 1
STANDARD 2
STANDARD 3

GRAPH SHOWING RELATIONSHIP BETWEEN RUBBER HARDNESS Hs AND SOUND PRESSURE LEVEL

FIG.2

1
12
10
11
D

FIG.3

4
2
3
2c
d5
2a
2b
d6
d1
1

FIG.4b

d2
2c
d4
3
4
2
d3
2b
2a
1

FIG.4a

## INTERNATIONAL SEARCH REPORT

International application No.
**PCT/JP2024/035724**

### A. CLASSIFICATION OF SUBJECT MATTER

***F16F 15/126***(2006.01)i; ***C08K 3/04***(2006.01)i; ***C08L 23/16***(2006.01)i; ***C08L 45/02***(2006.01)i; ***C08L 91/00***(2006.01)i
FI: F16F15/126 B; C08L23/16; C08L45/02; C08K3/04; C08L91/00

According to International Patent Classification (IPC) or to both national classification and IPC

### B. FIELDS SEARCHED

Minimum documentation searched (classification system followed by classification symbols)

F16F15/126; C08K3/04; C08L23/16; C08L45/02; C08L91/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/012018 A1 (NOK CORPORATION) 29 January 2015 (2015-01-29) paragraphs [0001]-[0088] | 1-3 |
| A | WO 2021/006018 A1 (NOK CORPORATION) 14 January 2021 (2021-01-14) entire text | 1-3 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/035724**

| Patent document cited in search report | Publication date (day/month/year) | Patent family member(s) | Publication date (day/month/year) |
|---|---|---|---|
| WO 2015/012018 A1 | 29 January 2015 | US 2016/0177076 A1<br>paragraphs [0001]-[0097]<br>CN 104854189 A | |
| WO 2021/006018 A1 | 14 January 2021 | US 2022/0275185 A1<br>entire text<br>CN 114127174 A<br>CN 117050435 A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2020041684 A